# EUROPEAN PATENT APPLICATION

(11) **EP 4 357 016 A1**
(43) Date of publication of application: **24.04.2024**
(21) Application number: 23199454.2
(22) Date of filing: 25.09.2023
(51) Int. Cl.: B01J 8/00, B01J 8/18, B01J 19/00, B01J 8/44

(54) **A FLUIDIZED BED REACTOR SYSTEM AND METHOD FOR OPERATING THE SAME**

(30) Priority: 07.10.2022 DE 102022126030
(71) Applicant: Skeleton Technologies GmbH, 01900 Grossröhrsdorf (DE)
(72) Inventor: MARKARIAN, Ohannes, 01900 Großröhrsdorf (DE)
(74) Representative: KASTEL Patentanwälte PartG mbB

(57) **Abstract**

The invention proposes a fluidized bed reactor system (10) comprising a fluidized bed reactor (12) and an inert gas source (38), wherein the fluidized bed reactor (12) comprises a reactor vessel (14) having an open top portion (16), a reaction chamber (18), and a top cover component (20) that is configured to close the open top portion (16), when installed thereon, characterized in that the top cover component (20) includes an inert gas inlet (30) that is fluidly connected to the inert gas source (38) in order to allow discharging of inert gas into the reaction chamber (18) in a manner that allows formation of a protective gas layer (48) that is configured for reducing or avoiding degradation of the top cover component (22).

## Description

The invention relates to a fluidized bed reactor system and a method for operating the same.

Fluidized bed reactors are a tried and tested method for performing chemical reactions between solid reactants and gaseous reactants.

WO 2022/200140 A1 discloses a chlorination reaction of metal carbides to manufacture microporous particulate carbon material. These types of reactions are exothermic and pose challenges regarding heat management and controlling the reaction. These issues are also typically interlinked.

DE 10 2021 107 172 A1 discloses a fluidized bed reactor having a support structure for a plate-like heat shield member. With measures like this, the thermal load on the top cover can be reduced.

Aggressive reactive gases like chlorine and high temperatures put a substantial strain on the fluidized bed reactors, specifically their top covers. The top covers are typically made of metal and may thus react with the reactive gases in the reaction chamber. In addition, not all accessories that are mounted on the top cover, such as plumbing, sensors, etc. are heat resistant enough. Additionally, depending on the solid reactants, it is possible that those can also produce a substantial amount of abrasion on the top cover. This can be the case for particulate carbide metal educts.

It is the object of the invention to improve fluidized bed reactors, preferably regarding chemical degradation and/or regarding the controlling of the reaction, especially in the case of exothermic reactions.

The object is achieved by the subject-matter of the independent claims. Preferred embodiments are subject-matter of the dependent claims.

The invention provides a fluidized bed reactor system comprising a fluidized bed reactor and an inert gas source, wherein the fluidized bed reactor comprises a reactor vessel having an open top portion, a reaction chamber, and a top cover component that is configured to close the open top portion, when installed thereon, wherein the top cover component includes an inert gas inlet that is fluidly connected to the inert gas source in order to allow discharging of inert gas into the reaction chamber in a manner that allows formation of a protective gas layer that is configured for reducing or avoiding degradation of the top cover component.

The fluidized bed reactor can be of the conventional kind regarding its function. In some embodiments, the reactor vessel may be made from quartz glass that is particularly resistant to the reactive gas that is used to fluidize the bed. In addition to the typical fluidization, there is an additional gas injection of inert gas into the reaction chamber at the top. The inert gas forms a protective gas layer that in its majority consists of the inert gas and in its minority consists of all other species in the reaction chamber. The inert gas is preferably unheated, i.e. roughly has ambient temperature.

Preferably, the inert gas inlet is configured such that, when in operation, the protective gas layer is formed adjacent to the top cover component and/or between the top cover component and a fluidized bed within the reaction chamber.

The protective gas layer is typically formed as a dynamic equilibrium between the inert gas injected at the top and the reactive gas or gasmixture injected at the bottom of the reactor vessel. The concentration of inert gas in the protective gas layer increases towards the top cover component and in general consists of more than 50%, preferably more than 80% of inert gas.

Preferably, the top cover component includes a gas outlet that is arranged to discharge gas from the reaction chamber.

The gas outlet is preferably configured such that the reactor vessel does not have a significant overpressure or any overpressure at all.

Preferably, the fluidized bed reactor further includes a filter that is arranged within the reaction chamber and configured such that, when in operation, the gas discharged from the reaction chamber passes through the filter.

With the filter, the solid components of the reaction do not exit the reactor vessel, which allows an increase in yield.

Preferably, the reactor vessel includes a gas inlet that is fluidly connected to an inert gas source. Preferably, the reactor vessel includes a plenum that is arranged at a bottom portion of the reactor vessel. Preferably, the inert gas source is fluidly connected to the gas inlet so as to discharge inert gas through the plenum into the reaction chamber, when in operation. Preferably, the reactor vessel includes a gas inlet that is fluidly connected to the inert gas source and arranged to discharge inert gas through the reactor vessel directly into the reaction chamber, preferably adjacent to the plenum.

In order to control the reaction within the reaction chamber, inert gas can also be injected into the reaction chamber, e.g., through the plenum or directly into the reaction chamber. The plenum may be separated from the reaction chamber via a gas distribution member, e.g., a fritted member made from preferably glass or ceramic. In that case, the inert gas injection into the reaction chamber may be located next to the plenum and above the gas distribution member.

Preferably, the system further comprises a sensor device that is arranged at the gas inlet, preferably outside the reactor vessel. Preferably, the sensor device is configured to capture sensor data that are indicative of a thermodynamic quantity, preferably temperature and/or pressure, in the reaction chamber.

The sensor device can be used to indirectly measure thermodynamic quantities, such as temperature and pressure, of the reaction chamber. The sensor device may capture, for example, the pressure or temperature of the inert gas injected into the reaction chamber. These data allow an indirect measurement of the quantities in the reaction chamber. With this configuration it is also possible to protect the sensor device from the aggressive reactive gas.

Preferably, the system further comprises a control unit that is operatively coupled to the sensor device. Preferably, the control unit is configured for evaluating the captured sensor data in order to determine the thermodynamic quantity.

With the control unit, the measured data are evaluated according to some predetermined calibration or model that can be determined by experiment. The control unit has the capability to determine the thermodynamic quantities within the reaction chamber with little error.

Preferably, the control unit is operatively coupled to the inert gas source, a reaction gas source that is fluidly connected to the reaction chamber, and/or a heating apparatus arranged for heating the reaction chamber. Preferably, the control unit is configured to control any of the inert gas source, the reaction gas source and the heating apparatus based on the determined thermodynamic quantity.

With this control unit, the reaction can be controlled indirectly by changing the gas flow, gas mixture, or amount heating, which may improve the yield but also serve to perform the reaction with less impact on the reactor vessel.

The subsequent described method can in general implement the same or similar advantages as the previously described system. It should be noted that for both embodiments, it is not necessary that all advantages are present at the same time or with the same quality.

The invention provides a method for operating a fluidized bed reactor that has a reactor vessel with a reaction chamber that is closed on a top portion by a top cover component, the method comprising fluidizing a fluidized bed of solid reactants with a heated reaction gas in order to perform a chemical reaction within the reaction chamber and injecting an inert gas into the reaction chamber so as to form a protective gas layer that reduces or avoids degradation of the top cover component.

Preferably, the inert gas is injected in a manner that forms the protective gas layer adjacent to the top cover component and/or between the top cover component and the fluidized bed.

Preferably, a gas outlet discharges gas from the reaction chamber, preferably through a filter that is arranged within the reaction chamber.

Preferably, the reactor vessel includes a plenum that is arranged at a bottom portion of the reactor vessel. Preferably, inert gas is injected through the plenum into the reaction chamber. Preferably, inert gas is injected through the reactor vessel directly into the reaction chamber, preferably adjacent to the plenum.

Preferably, a sensor device is arranged at the gas injection. Preferably, the sensor device captures sensor data that are indicative of a thermodynamic quantity, preferably temperature and/or pressure, in the reaction chamber.

Preferably, a control unit is operatively coupled to the sensor device. Preferably, the control unit evaluates the captured sensor data in order to determine the thermodynamic quantity.

Preferably, the control unit is operatively coupled to an inert gas source, a reaction gas source that is fluidly connected to the reaction chamber, and/or a heating apparatus arranged for heating the reaction chamber. Preferably, the control unit controls any of the inert gas source, the reaction gas source and the heating apparatus based on the determined thermodynamic quantity.

The invention provides a fluidized bed reactor system comprising a fluidized bed reactor and an inert gas source, wherein the fluidized bed reactor comprises a reactor vessel having a plenum that is arranged at a bottom portion of the reactor vessel, a reaction chamber that is separated from the plenum by a gas distribution member, wherein the reactor vessel includes a gas inlet that is fluidly connected to the inert gas source, wherein the gas inlet is configured to discharge inert gas through the plenum into the reaction chamber, when in operation, and/or wherein the gas inlet is arranged to discharge inert gas through the reactor vessel directly into the reaction chamber, preferably adjacent to the plenum, wherein the system further comprises a sensor device that is arranged at the gas inlet outside the reactor vessel.

This system has the focus more on measuring and controlling the reaction in the reaction chamber. In general, the system and subsequent method may achieve the same or similar advantages as the previously described embodiments.

Preferably, the sensor device is configured to capture sensor data that are indicative of a thermodynamic quantity, preferably temperature and/or pressure, in the reaction chamber.

Preferably, the system further comprises a control unit that is operatively coupled to the sensor device. Preferably, the control unit is configured for evaluating the captured sensor data in order to determine the thermodynamic quantity.

Preferably, the control unit is operatively coupled to the inert gas source, a reaction gas source that is fluidly connected to the reaction chamber, and/or a heating apparatus arranged for heating the reaction chamber. Preferably, the control unit is configured to control any of the inert gas source, the reaction gas source and the heating apparatus based on the determined thermodynamic quantity.

Preferably, a top cover component that closes an open top portion of the reactor vessel includes an inert gas inlet that is fluidly connected to the inert gas source in order to allow discharging of inert gas into the reaction chamber in a manner that allows formation of a protective gas layer that is configured for reducing or avoiding degradation of the top cover component.

Preferably, the inert gas inlet is configured such that, when in operation, the protective gas layer is formed adjacent to the top cover component and/or between the top cover component and a fluidized bed within the reaction chamber.

Preferably, the top cover component includes a gas outlet that is arranged to discharge gas from the reaction chamber.

Preferably, the fluidized bed reactor further includes a filter that is arranged within the reaction chamber and configured such that, when in operation, the gas discharged from the reaction chamber passes through the filter.

The invention provides a method for operating a fluidized bed reactor that has a reactor vessel with a reaction chamber that is separated from a plenum that is arranged at a bottom portion of the reactor vessel by a gas distribution member, the method comprising fluidizing a fluidized bed of solid reactants with a heated reaction gas in order to perform a chemical reaction within the reaction chamber and injecting an inert gas into the reaction chamber through a gas inlet and through the plenum, and/or through the gas inlet and through the reactor vessel directly into the reaction chamber, preferably adjacent to the plenum and a sensor device that is arranged at the gas inlet, preferably outside the reactor vessel captures sensor data that are indicative of a thermodynamic quantity, preferably temperature and/or pressure, in the reaction chamber.

Preferably, a control unit is operatively coupled to the sensor device. Preferably, the control unit evaluates the captured sensor data in order to determine the thermodynamic quantity.

Preferably, the control unit is operatively coupled to an inert gas source, a reaction gas source that is fluidly connected to the reaction chamber, and/or a heating apparatus arranged for heating the reaction chamber. Preferably, the control unit controls any of the inert gas source, the reaction gas source and the heating apparatus based on the determined thermodynamic quantity.

Preferably, a top cover component that closes an open top portion includes an inert gas inlet that discharges inert gas into the reaction chamber in a manner that allows formation of a protective gas layer that is configured for reducing or avoiding degradation of the top cover component.

Preferably, the inert gas is injected in a manner that forms the protective gas layer adjacent to the top cover component and/or between the top cover component and the fluidized bed.

Preferably, a gas outlet discharges gas from the reaction chamber, preferably through a filter that is arranged within the reaction chamber.

Embodiments of the invention are described in more detail with reference to the accompanying schematic drawings that are listed below
Fig. 1 depicts an embodiment of a fluidized bed reactor system; and
Fig. 2 depicts another embodiment of a fluidized bed reactor system.

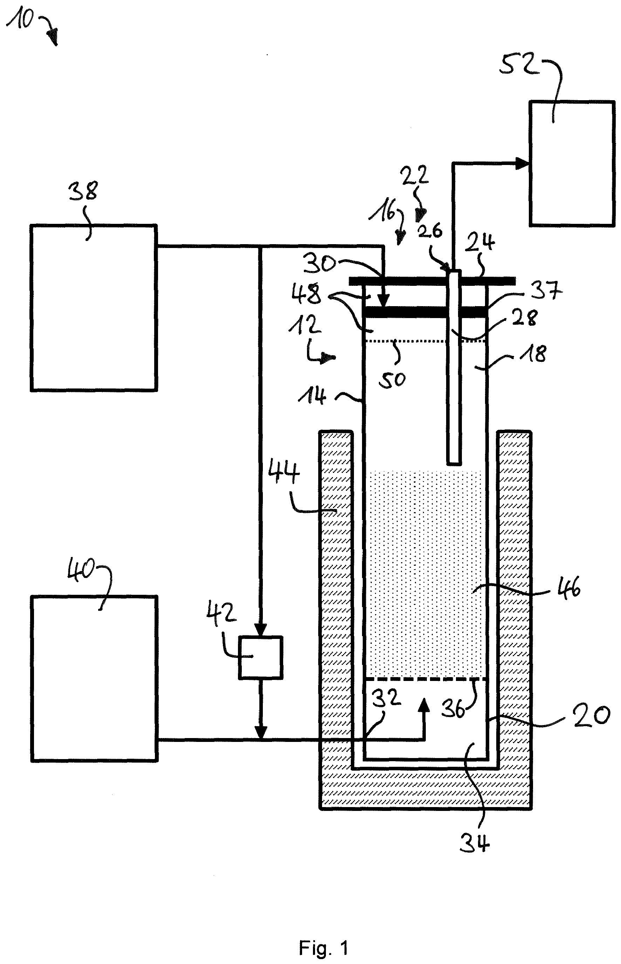

Referring to Fig. 1, a fluidized bed reactor system 10 is shown. The fluidized bed reactor system 10 comprises a fluidized bed reactor 12.

The fluidized bed reactor 12 has a reactor vessel 14. The reactor vessel 14 comprises an open top portion 16, a reaction chamber 18 and a closed bottom portion 20.

The top portion 16 is closed by a top cover component 22. The top cover component 22 comprises a lid 24. The lid 24 is preferably made of metal, whereas the reactor vessel 14 is made of a none-metallic material, such as quartz glass. The lit 24 may serve as a support for a variety of accessories, such as sensors, etc.

The top cover component 22 includes a gas outlet 26. The gas outlet 26 is dimensioned such that during operation, there es is no significant overpressure in the reaction chamber 18. The gas outlet 26 maybe equipped with a filter 28 that extends from the lid 24 into reaction chamber 18.

The top cover component 22 further includes an inert gas inlet 30. The inert gas inlet 30 is preferably supported by the lid 24.

The fluidized bed reactor 12 further comprises a gas inlet 32. The gas inlet 32 is arranged in the bottom portion 20. The bottom portion 20 may also include a plenum 34 that is preferably separated from reaction chamber 18 by a gas distribution member 36.

The fluidized bed reactor 12 may include a heat shield 37 that is preferably arranged at the top portion 16. The heat shield 37 is preferably made of graphite and can be supported directly by the reactor vessel 14.

The fluidized bed reactor system 10 further includes an inert gas source 38, which provides inert gas, such as argon or nitrogen, to the fluidized bed reactor 12. It should be noted that the term "inert" as used herein designates gases that under the typical reaction conditions within the reaction chamber 18 do not react with the solid or gases reactions.

The inert gas source 38 is fluidly connected to the inert gas inlet 30.

The fluidized bed reactor system 10 further includes a reactive gas source 40. The reactive gas source is fluidly connected to the gas inlet 32, so that the reactive gas may be discharged into the plenum 34 and through the gas distribution member 36 into the reaction chamber 18.

The reactive gas from the reactive gas source 40 may be mixed with inert gas from the inert gas source 38.

As depicted in Fig. 1, the inert gas branch that fluidly connects the inert gas source 38 to the gas inlet 32 comprises a sensor device 42. The sensor device 42 may be configured to capture pressure and/or temperature of the inert gas that is discharged into the reactor vessel 14 through the gas inlet 32. The sensor 42 is arranged close to but outside the reactor vessel 14.

While not depicted in Fig. 1, the sensor device 32 may also be arranged between a heating apparatus and the reactor vessel 14. In this configuration the sensor device 42 must be configured to withstand the typical heating temperatures of the heating apparatus 44.

Subsequently, an operation of the fluidized bed reactor system 10 is described in more detail. While the operation is described with reference to the chlorination reaction disclosed in WO 2022/200140 A1, it should be noted that the ideas described herein may be also applicable to other types of reactions.

The disclosure of the method on pages 6 to 8 of the WO document is explicitly incorporated herein by reference.

The reaction chamber is filled with solid reactant, such as silicon carbide particles. The solid reactant is fluidized by reactive gas entering the reaction chamber 18 thereby generating a fluidized bed 46. The reactor vessel 14 is heated using the heating apparatus 44 to a reaction temperature that allows reaction between the solid reactant and the reactive gas within the fluidized bed 46. In addition, inert is injected through the inert gas inlet 30 into the reaction chamber 18. A dynamic equilibrium forms between the gas mixture injected through the bottom portion 20 and the inert gas injected through the gas inlet 30 through the top cover component 22. The inert gas forms a protective gas layer 48 that mostly consists of cool inert gas. As a result, the top cover component 22, specifically the lid 24, is shielded from the exothermic reaction taking place in the fluidized bed 46. As a result, the top cover component 22 is better protected against the reactions within the reaction chamber 18.

The heat shield 37 is depicted as being embedded in the protective gas layer 48, however it is possible that the heat shield 37 is also arranged outside the protective gas layer 48 more towards the fluidized bed 46.

As illustrated in Fig. 1, a lower boundary 50 of the protective gas layer 48 is spaced apart from the lid 24 with sufficient distance, to be able to protect the lid 24 against the reactants and the temperatures within the reaction chamber 18. The lower boundary 50 may be defined as an amount of inert gas that is below 50% preferably below 80%, more preferably below 90%.

The gases that are injected into the reaction chamber 18 and the gases generated by the chemical reaction taking place in the fluidized bed 46 are discharged through the filter 28, the gas outlet 24 into an exhaust processing system 52. The exhaust processing system 52 processes the exhaust gases such that they can be safely discharged into the atmosphere or be stored in fluid form. The exhaust processing system 52 may be configured to neutralize acid or alkaline exhaust gases.

During operation, the sensor device 42 measures temperature and/or pressure of the inert gas that just mixed with the reactive gas to be discharged through the gas inlet 32 into the reactor vessel 14. The sensor data collected by the sensor device 42 are evaluated by a control unit (not shown) that is capable of determining the temperature and all pressure within the reaction chamber 18 based on the sensor data measured for the inert gas.

The control unit is operatively coupled to the gas sources 38, 40, the heating apparatus 44, the exhaust processing system 52 and the gas outlet 26, so as to control the respective components based on the temperature and/or pressure that was inferred to be present in the reaction chamber 18.

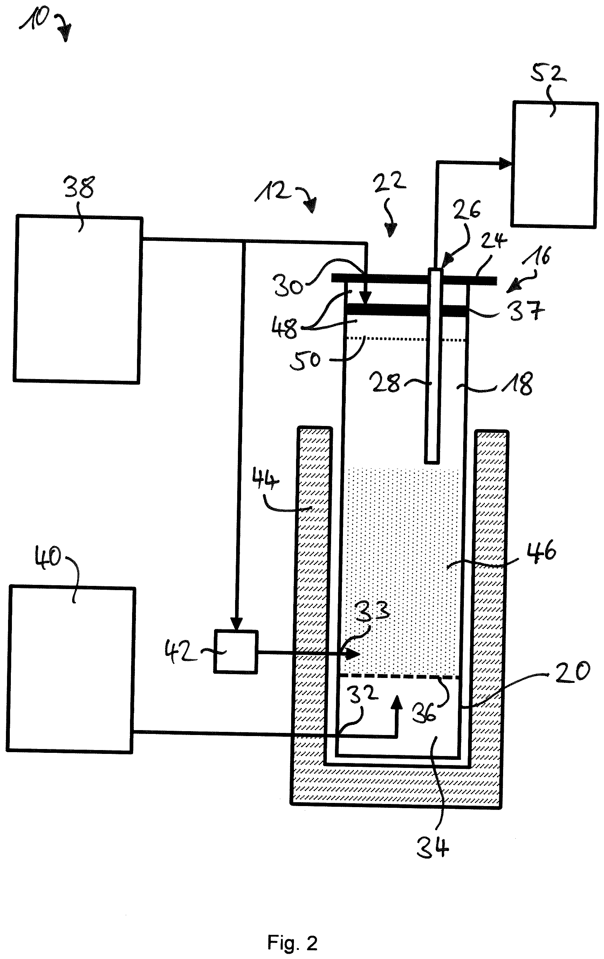

Referring to Fig. 2, another embodiment of the fluidized bed reactor system 10 is described only in so far as it differs from the previously described embodiment.

In contrast to the previous embodiment, the reactor vessel 14 comprises another gas inlet 33 that is arranged in the vicinity of the bottom portion 20 and allows a direct discharge of the inert gas into the fluidized bed 46, preferably at its bottom. The sensor device 42 measures the pressure and/or temperature of the inert gas discharged thru the gas inlet 33 and due to the configuration is better able to capture sensor data that are indicative of the temperature and/or pressure within the reaction chamber 18, specifically within the fluidized bed 46.

While not depicted in Fig. 2, it is also possible that the sensor device 42 is arranged between the reactor vessel 14 and the heating apparatus 44. It is also possible that the inert gas is mixed with the reactive gas before being discharged through the gas inlet 32.

### List of reference signs:

10 Fluidized bed reactor system
12 Fluidized bed reactor
14 Reactor vessel
16 Open top portion
18 Reaction chamber
20 Closed bottom portion
22 Top cover component
24 Lid
26 Gas outlet
28 Filter
30 Inert gas inlet
32 Gas inlet
34 Plenum
36 Distribution
37 Heat shield
38 Inert gas source
40 Reactive gas source
42 Sensor device
44 Heating apparatus
46 Fluidized bed
48 Protective gas layer
50 Lower boundary
52 Exhaust processing system

## Claims

1. A fluidized bed reactor system (10) comprising a fluidized bed reactor (12) and an inert gas source (38), wherein the fluidized bed reactor (12) comprises a reactor vessel (14) having an open top portion (16), a reaction chamber (18), and a top cover component (20) that is configured to close the open top portion (16), when installed thereon, **characterized in that** the top cover component (20) includes an inert gas inlet (30) that is fluidly connected to the inert gas source (38) in order to allow discharging of inert gas into the reaction chamber (18) in a manner that allows formation of a protective gas layer (48) that is configured for reducing or avoiding degradation of the top cover component (22).

2. The system according to claim 1, wherein the inert gas inlet (30) is configured such that, when in operation, the protective gas layer (48) is formed adjacent to the top cover component (20) and/or between the top cover component (20) and a fluidized bed (46) within the reaction chamber (18).

3. The system according to any of the preceding claims, wherein the top cover component (22) includes a gas outlet (26) that is arranged to discharge gas from the reaction chamber (18).

4. The system according to claim 3, wherein the fluidized bed reactor (12) further includes a filter (28) that is arranged within the reaction chamber (18) and configured such that, when in operation, the gas discharged from the reaction chamber (18) passes through the filter (28).

5. The system according to any of the preceding claims, wherein the reactor vessel (14) includes a gas inlet (32) and a plenum (34) that is arranged at a bottom portion (20) of the reactor vessel (14), and the inert gas source (38) is fluidly connected to the gas inlet (32) so as to discharge inert gas through the plenum (34) into the reaction chamber (18), when in operation; and/or wherein the reactor vessel (14) includes a gas inlet (32) that is fluidly connected to the inert gas source (38) and arranged to discharge inert gas through the reactor vessel (14) directly into the reaction chamber (18), preferably adjacent to the plenum (34).

6. The system according to claim 5, further comprising a sensor device (42) that is arranged at the gas inlet (32), wherein the sensor device is configured to capture sensor data that are indicative of a thermodynamic quantity, preferably temperature and/or pressure, in the reaction chamber (18).

7. The system according to claim 6, further comprising a control unit that is operatively coupled to the sensor device and configured for evaluating the captured sensor data in order to determine the thermodynamic quantity.

8. The system according to claim 7, wherein the control unit is operatively coupled to the inert gas source (38), a reaction gas source (40) that is fluidly connected to the reaction chamber (18), and/or a heating apparatus (44) arranged for heating the reaction chamber (18), and the control unit is configured to control any of the inert gas source (38), the reaction gas source (40) and the heating apparatus (44) based on the determined thermodynamic quantity.

9. A method for operating a fluidized bed reactor (12) that has a reactor vessel (14) with a reaction chamber (18) that is closed on a top portion (16) by a top cover component (22), the method comprising fluidizing a fluidized bed (46) of solid reactants with a heated reaction gas in order to perform a chemical reaction within the reaction chamber (18) and injecting an inert gas into the reaction chamber (18) so as to form a protective gas layer (48) that reduces or avoids degradation of the top cover component (22).

10. The method according to claim 9, wherein the inert gas is injected in a manner that forms the protective gas layer (48) adjacent to the top cover component (22) and/or between the top cover component (22) and the fluidized bed (46).

11. The method according to any of the claims 9 or 10, wherein a gas outlet (26) discharges gas from the reaction chamber (18), preferably through a filter (28) that is arranged within the reaction chamber (18).

12. The method according to any of the claims 9 to 11, wherein the reactor vessel (14) includes a plenum (34) that is arranged at a bottom portion (20) of the reactor vessel (14), and inert gas is injected through the plenum (34) into the reaction chamber (18); and/or wherein inert gas is injected through the reactor vessel (14) directly into the reaction chamber (18), preferably adjacent to the plenum (34).

13. The method according to claim 12, wherein a sensor device (42) that is arranged at the gas injection captures sensor data that are indicative of a thermodynamic quantity, preferably temperature and/or pressure, in the reaction chamber (18).

14. The method according to claim 13, wherein a control unit that is operatively coupled to the sensor device (42) evaluates the captured sensor data in order to determine the thermodynamic quantity.

15. The method according to claim 14, wherein the control unit is operatively coupled to an inert gas source (38), a reaction gas source (40) that is fluidly connected to the reaction chamber (18), and/or a heating apparatus (44) arranged for heating the reaction chamber (18), and the control unit controls any of the inert gas source (38), the reaction gas source (40) and the heating apparatus (44) based on the determined thermodynamic quantity.
